(19)

Europäisches Patentamt

European Patent Office

Office européen des brevets

(11) **EP 3 805 708 A1**

(12) **EUROPEAN PATENT APPLICATION**
published in accordance with Art. 153(4) EPC

(43) Date of publication:
**14.04.2021 Bulletin 2021/15**

(21) Application number: **19811999.2**

(22) Date of filing: **09.04.2019**

(51) Int Cl.:
*G01D 11/30* (2006.01)          *B60K 35/00* (2006.01)
*G02B 27/01* (2006.01)

(86) International application number:
**PCT/JP2019/015372**

(87) International publication number:
**WO 2019/230198 (05.12.2019 Gazette 2019/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.05.2018   JP 2018103943**

(71) Applicant: **Panasonic Intellectual Property Management Co., Ltd.**
**Osaka-shi, Osaka 540-6207 (JP)**

(72) Inventors:
• **MATSUI, Satoshi**
  **Osaka-shi, Osaka 540-6207 (JP)**
• **KATSUYAMA, Norikazu**
  **Osaka-shi, Osaka 540-6207 (JP)**

(74) Representative: **Eisenführ Speiser Patentanwälte Rechtsanwälte PartGmbB**
**Postfach 31 02 60**
**80102 München (DE)**

(54) **POSITION ADJUSTING DEVICE, AND PROJECTION SYSTEM PROVIDED WITH SAME**

(57)     A position adjustment apparatus (60) includes a first mounting base (71b), a second mounting base (66a), a moving mechanism, an acceleration sensor (61), and a signal output part (72). The position adjustment apparatus (60) is used for adjusting a mounting position of a posture detection apparatus (40) mounted on a moving body (200) for detecting a variation in posture of the moving body (200). The first mounting base (71 b) is mounted on a portion of the moving body (200). The second mounting base (66a) is mounted on the posture detection apparatus (40). The moving mechanism rotationally moves the second mounting base (66a) relative to the first mounting base (71b) in at least one of three axial directions corresponding to a first axis, a second axis, and a third axis orthogonal to each other. The acceleration sensor (61) is arranged on the second mounting base (66a). The signal output part (72) outputs a detection signal from the acceleration sensor (61) to the outside.

*Fig.2*

**Description**

TECHNICAL FIELD

The present disclosure relates to a position adjustment apparatus adjusting a mounting position of a sensor detecting a posture of a moving body such as a vehicle, and a projection system including the position adjustment apparatus.

BACKGROUND ART

Patent Document 1 discloses a vehicle information projection system performing augmented reality (AR) display using a head-up display (HUD) apparatus. The HUD apparatus projects light representative of a virtual image on a windshield of a vehicle to allow a viewer who is an occupant of the vehicle to visually recognize the virtual image together with a real view outside the vehicle. For example, a virtual image representative of a guide route for the vehicle is displayed in association with a display object (e.g., road) in the real view. This enables the occupant to confirm the guide route while visually recognizing the real view. The vehicle information projection system includes a vehicle speed sensor and corrects the display position of the virtual image in accordance with acceleration. This prevents a positional deviation of the virtual image from occurring at the time of sudden deceleration and sudden acceleration of the vehicle.

PRIOR ART DOCUMENTS

PATENT DOCUMENTS

Patent Document 1: Japanese Patent No. 6201690
Patent Document 2: Japanese Laid-Open Patent Publication No. 5-318250
Patent Document 3: Japanese Laid-Open Patent Publication No. 2016-78162
Patent Document 4: Japanese Laid-Open Patent Publication No. 2016-82138
Patent Document 5: Japanese Laid-Open Patent Publication No. 2015-460

SUMMARY OF THE INVENTION

PROBLEM TO BE SOLVED BY THE INVENTION

The present disclosure provides a position adjustment apparatus capable of highly accurately adjusting a mounting position of a sensor detecting a posture of a moving body such as a vehicle, and a projection system including the position adjustment apparatus.

MEANS FOR SOLVING PROBLEM

The position adjustment apparatus of the present disclosure includes a first mounting base, a second mounting base, a moving mechanism, an acceleration sensor, and a signal output part. The position adjustment apparatus is used for adjusting a mounting position of a posture detection apparatus mounted on a moving body for detecting a variation in posture of the moving body. The first mounting base is mounted on a portion of the moving body. The second mounting base is mounted on the posture detection apparatus. The moving mechanism rotationally moves the second mounting base relative to the first mounting base in at least one of three axial directions corresponding to a first axis, a second axis, and a third axis orthogonal to each other. The acceleration sensor is arranged on the second mounting base. The signal output part outputs a detection signal from the acceleration sensor to the outside.

A projection system according to an aspect of the present disclosure includes a posture detection apparatus, a projection apparatus, and the position adjustment apparatus described above. The posture detection apparatus detects the posture of the moving body. The projection apparatus projects moving object information while correcting a projection position by reference to a detection result from the posture detection apparatus. The position adjustment apparatus is used for adjusting a mounting posture of the posture detection apparatus relative to the moving body.

A projection system according to another aspect of the present disclosure includes a posture detection apparatus, a projection apparatus, the position adjustment apparatus described above, and a correction processing apparatus. The projection apparatus projects moving object information while correcting a projection position by reference to a detection result from the posture detection apparatus. The position adjustment apparatus is used for adjusting a mounting posture of the posture detection apparatus relative to the moving body. The correction processing apparatus receives a detection signal from the acceleration sensor to calculate a mounting position of the posture detection apparatus on the moving body.

The moving mechanism of the position adjustment apparatus includes a first rotating mechanism rotationally moving the second mounting base around the first axis, a second rotating mechanism rotationally moving the second mounting base around the second axis, and drive parts respectively driving the first rotation mechanism and the second rotation mechanism. The position adjustment apparatus includes a drive control part controlling the drive parts and compares a mounting position calculated by the correction processing apparatus with a predetermined adjustment value. The drive control part controls the drive parts in accordance with a result of the comparison by the position adjustment apparatus.

EFFECT OF THE INVENTION

The present disclosure can provide the position adjustment apparatus for highly accurately adjusting a mounting position of a sensor detecting a posture of a moving body such as a vehicle and can further provide the projection system improved in the posture detection accuracy for the moving body.

BRIEF DESCRIPTION OF DRAWINGS

Fig. 1 is a diagram for explaining a projection system to which a position adjustment apparatus is applied.
Fig. 2 is a block diagram showing a projection system according to a first embodiment.
Fig. 3 is a diagram for explaining a relationship between a mounting accuracy of a gyro sensor on a vehicle and a posture detection accuracy.
Fig. 4 is a diagram for explaining a mounting structure of a posture detection apparatus on the vehicle according to the first embodiment.
Fig. 5 is a perspective view showing a configuration of a position adjustment apparatus according to the first embodiment.
Fig. 6 is a diagram showing each constituent element of the position adjustment apparatus according to the first embodiment.
Fig. 7 is a flowchart showing a flow of position adjustment according to the first embodiment.
Fig. 8 is a diagram for explaining a method of calculating an angle from an acceleration sensor value.
Fig. 9 is a block diagram showing a projection system according to a second embodiment.
Fig. 10 is a development view for explaining a configuration of a position adjustment apparatus according to the second embodiment.
Fig. 11 is a flowchart showing a flow of position adjustment according to the second embodiment.
Fig. 12 is a block diagram showing a projection system according to a modification of the second embodiment.

MODES FOR CARRYING OUT THE INVENTION

Embodiments will now be described in detail with reference to the drawings as needed. It is noted that detailed description will not be provided more than necessary in some cases. For example, detailed description of already well-known facts and repeated description of substantially the same constituent elements may not be provided. This is for the purpose of avoiding unnecessary redundancy of the following description and facilitating understanding by those skilled in the art.

The accompanying drawings and the following description are provided by the present inventor(s) for sufficient understanding of the present disclosure by those skilled in the art, and it is not intended to limit the subject matter described in claims thereto.

(First Embodiment)

A first embodiment will hereinafter be described with reference to the drawings. First, description will be made of a configuration of a projection system 100 to which the position adjustment apparatus of the present disclosure is applied. In an example described in the first embodiment, a moving body is a vehicle such as an automobile, and the projection system is a head-up display (HUD) system displaying a virtual image in front of a windshield of the vehicle.

1-1. Configuration of Projection System

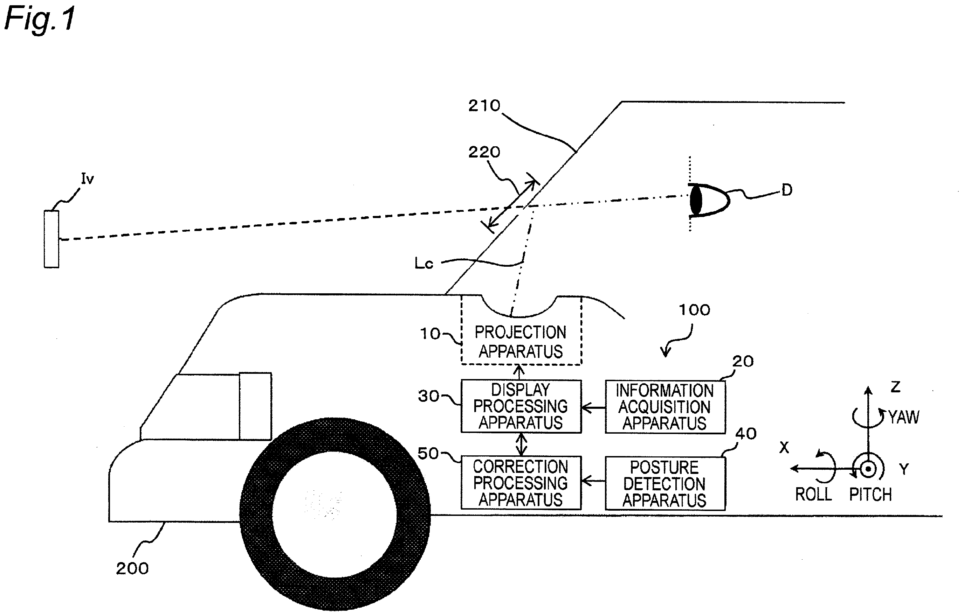

Fig. 1 is a diagram for explaining a projection system 100 to which the position adjustment apparatus of the present disclosure is applied. In Fig. 1, a roll axis of a vehicle 200 is an X axis, a pitch axis of the vehicle 200 is a Y axis, and a yaw axis of the vehicle 200 is a Z axis. Therefore, the X axis is an axis orthogonal to the Y axis and the Z axis and along a sight direction of an occupant D visually recognizing a virtual image Iv. The Y axis is an axis along a left-right direction when viewed from the occupant D visually recognizing the virtual image Iv. The Z axis is an axis along a height direction of the vehicle 200.

The projection system 100 is a HUD system performing so-called augmented reality (AR) display in which the virtual image Iv is superimposed on a real view in front of a windshield 210 of the vehicle 200. The virtual image Iv indicates predetermined information. For example, the virtual image Iv is made up of figures and characters indicative of a route for guiding to a destination, an estimated time of arrival at the destination, a running direction, a speed, various warnings, etc. The projection system 100 is disposed in the vehicle 200 and projects a display light Lc representative of the virtual image Iv into a display area 220 of the windshield 210 of the vehicle 200. In this embodiment, the display area 220 is an area of a portion of the windshield 210. The display area 220 may be the entire area of the windshield 210. The display light Lc is reflected by the windshield 210 toward the inside of the vehicle. As a result, the occupant (viewer) D in the vehicle 200 visually recognizes the reflected display light Lc as the virtual image Iv in front of the vehicle 200.

The projection system 100 includes a projection apparatus 10, an information acquisition apparatus 20, a display processing apparatus 30, a posture detection apparatus 40, and a correction processing apparatus 50.

The projection apparatus 10 projects the display light Lc representative of the virtual image Iv into the display area 220. The projection apparatus 10 includes, for example, a liquid crystal display element displaying an image of the virtual image Iv, a light source such as an LED illuminating the liquid crystal display element, a mirror and a lens reflecting the display light Lc of the image displayed by the liquid crystal display element to the display area 220, etc. The projection apparatus 10 is disposed in a dashboard of the vehicle 200, for example.

The information acquisition apparatus 20 acquires information on the position of the vehicle 200 and the outside of the vehicle. Specifically, the information acquisition apparatus 20 measures the position of the vehicle 200 and generates position information indicative of the position. The information acquisition apparatus 20 further acquires vehicle outside information indicative of an object and a distance to the object. The object is a person, a sign, a road, etc. The information acquisition apparatus 20 outputs vehicle-related information including the position information and the vehicle outside information of the vehicle 200

The display processing apparatus 30 controls the display of the virtual image Iv based on the vehicle-related information obtained from the information acquisition apparatus 20 and outputs image data of the virtual image Iv to the projection apparatus 10. The display processing apparatus 30 controls the display of the virtual image Iv based on a correction amount of a display position of the virtual image Iv obtained from the correction processing apparatus 50. The correction amount will be described later. The display processing apparatus 30 may control the display of the virtual image Iv based on the vehicle-related information.

The posture detection apparatus 40 detects a posture variation of the vehicle 200.

The correction processing apparatus 50 calculates the correction amount of the display position of the virtual image Iv based on the posture variation of the vehicle 200 detected by the posture detection apparatus 40.

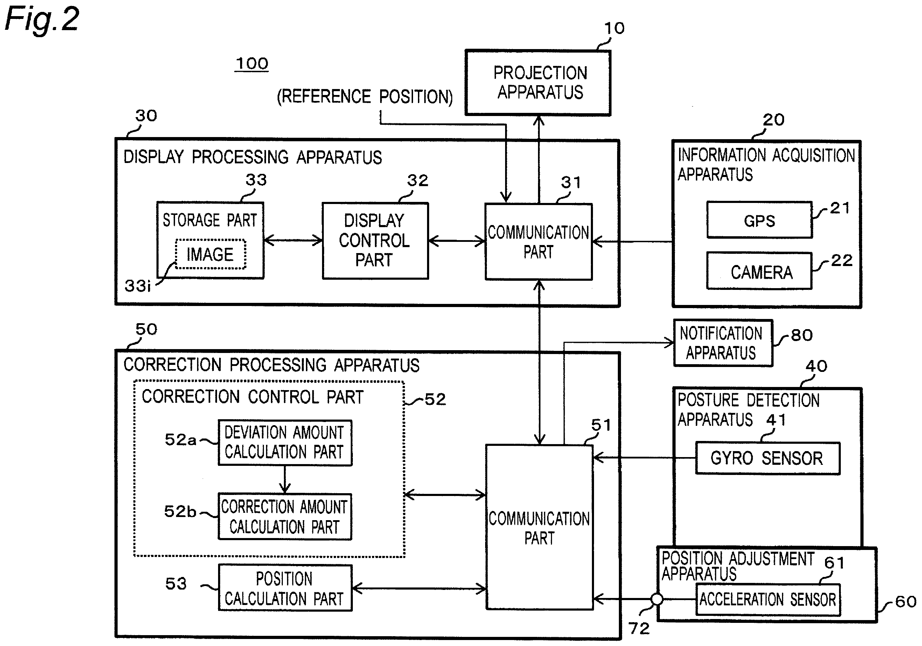

Fig. 2 is a block diagram showing an internal configuration of the projection system 100. The projection system 100 according to this embodiment further includes a position adjustment apparatus 60 and a notification apparatus 80.

The information acquisition apparatus 20 includes a GPS (Global Positioning System) module 21 detecting a position indicative of a current location of the vehicle 200 in a geographical coordinate system. Specifically, the GPS module 21 receives radio waves from GPS satellites and measures the latitude and longitude of a receiving position. The GPS module 21 generates position information indicative of the measured latitude and longitude. The information acquisition apparatus 20 further includes a camera 22 imaging an outside view and generating imaging data. For example, the information acquisition apparatus 20 specifies an object from the imaging data and measures a distance to the object. The information acquisition apparatus 20 generates information indicative of the object and the distance to the object as the vehicle outside information. The information acquisition apparatus 20 outputs the vehicle-related information including the position information and the vehicle outside information to the display processing apparatus 30. The imaging data generated by the camera 22 may be output to the display processing apparatus 30.

The display processing apparatus 30 includes a communication part 31, a display control part 32, and a storage part 33.

The communication part 31 includes a circuit communicating with an external device in conformity with a predetermined communication standard (e.g., LAN, Wi-Fi (registered trademark), Bluetooth (registered trademark), USB, HDMI (registered trademark), CAN (controller area network), SPI (Serial Peripheral Interface)).

The display control part 32 can be implemented by a semiconductor element etc. The display control part 32 can be made up of a microcomputer, a CPU, an MPU, a GPU, a DSP, an FPGA, and an ASIC, for example. The function of the display control part 32 may be constituted only by hardware or may be implemented by combining hardware and software. The display control part 32 implements a predetermined function by reading data and a program stored in the storage part 33 and performing various arithmetic processes.

The storage part 33 is a storage medium storing programs and data required for implementing the functions of the display processing apparatus 30. The storage part 33 can be realized by, for example, a hard disk (HDD), an SSD, a RAM, a DRAM, a ferroelectric memory, a flash memory, a magnetic disk, or a combination thereof.

The storage part 33 stores multiple image data 33i representative of the virtual image Iv. The display control part 32 determines the virtual image Iv to be displayed based on the vehicle-related information obtained from the information acquisition apparatus 20. The display control part 32 reads and outputs the image data 33i of the determined virtual image Iv from the storage part 33 to the projection apparatus 10. Additionally, the display controller 32 sets the display position of the virtual image Iv. The display control part 32 outputs display information indicative of whether the virtual image Iv is displayed, or whether the virtual image Iv is being displayed, to the correction processing apparatus 50.

The posture detection apparatus 40 includes a gyro sensor 41 detecting an angular speed. The gyro sensor 41 outputs the detected angular speed to the correction processing apparatus 50 as posture variation information indicative of the posture variation of the vehicle 200. The gyro sensor 41 is a sensor having three axes orthogonal to each other.

The position adjustment apparatus 60 is arranged between the posture detection apparatus 40 and the vehicle 200. The position adjustment apparatus 60 is used for adjusting a mounting angle of the posture detection apparatus 40 relative to the vehicle 200. The position adjustment apparatus 60 detects the mounting angle of the posture detection apparatus 40 relative to the vehicle 200. Details of the configuration of the position adjustment apparatus 60 will be described later.

The correction processing apparatus 50 includes a communication part 51, a correction control part 52, and a position calculation part 53.

The communication part 51 includes a circuit communicating with an external device in conformity with a predetermined communication standard (e.g., LAN, Wi-Fi (registered trademark), Bluetooth (registered trademark), USB, HDMI (registered trademark), CAN (controller area network), SPI (Serial Peripheral Interface).

The correction control part 52 can be implemented by a semiconductor element etc. The correction control part 52 can be made up of a microcomputer, a CPU, an MPU, a GPU, a DSP, an FPGA, and an ASIC, for example. The function of the display control part 32 may be constituted only by hardware or may be implemented by combining hardware and software. The correction control part 52 implements a predetermined function by reading data and a program stored in a storage part not shown in the correction processing apparatus 50 and performing various arithmetic processes.

The correction control part 52 includes a deviation amount calculation part 52a and a correction amount calculation part 52b as functional constituent elements.

The deviation amount calculation part 52a calculates the posture (angular deviation amount) of the vehicle 200 based on the posture variation information output by the posture detection apparatus 40. For example, the deviation amount calculation part 52a integrates the angular speeds detected by the gyro sensor 41 to calculate angles (roll angle, pitch angle, and yaw angle) of the vehicle 200 in three axial directions. As a result, deviation amounts (angles) of the vehicle 200 can be calculated in rotation directions (a roll direction, a pitch direction, and a yaw direction) around the X axis (roll axis), the Y axis (pitch axis), and the Z axis (yaw axis) shown in Fig. 1. Although all angles in the three axial directions are calculated in this embodiment, the angles in one or two axial directions may be calculated. For example, only the angles in the Y-axis and Z-axis directions may be calculated.

The correction amount calculation part 52b calculates the correction amount of the display position of the virtual image Iv in accordance with the posture (angular deviation amount) of the vehicle 200. Specifically, the correction amount calculation part 52b converts the deviation amounts of the angles (pitch and yaw angles) calculated by the deviation amount calculation part 52a into the number of pixels and determines a correction amount such that an original state is restored from the number of pixels corresponding to the deviation (hereinafter, also referred to as "deviation pixel number"). The roll angle is directly output as an angle. For example, the deviation amount calculation part 52a determines a correction amount such that an original state is restored from the deviation amount of the roll angle. In this embodiment, the correction amount is indicated by the numbers of pixels in the Y axis direction and the Z axis direction. The correction amount calculation part 52b outputs the calculated correction amount to the display processing apparatus 30.

The position calculation part 53 calculates the mounting angle of the posture detection apparatus 40 based on a signal from the position adjustment apparatus 60. The position calculation part 53 can be implemented by a semiconductor element etc. The position calculation part 53 can be made up of a microcomputer, a CPU, an MPU, a GPU, a DSP, an FPGA, or an ASIC, for example. The position calculation part 53 may be included in the correction control part 52 as a functional constituent element. The display processing apparatus 30 and the correction processing apparatus 50 bidirectionally communicate through the communication parts 31, 51. The display processing apparatus 30 outputs the display information to the correction processing apparatus 50. The correction processing apparatus 50 outputs the correction amount to the display processing apparatus 30.

The notification apparatus 80 includes a display and displays a predetermined notification to an operator. The predetermined notification will be described later.

1-2. Problem to be solved by Present Disclosure

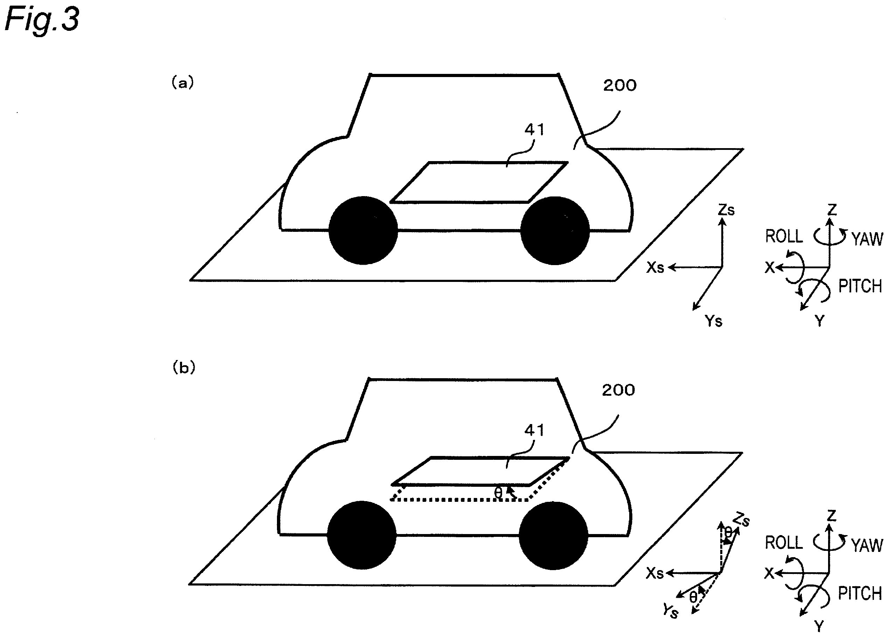

Fig. 3 is a diagram for explaining a relationship between a mounting accuracy of the gyro sensor 41 on the vehicle 200 and a posture detection accuracy. The gyro sensor 41 is a sensor having Xs, Ys, and Zs axes orthogonal to each other. In the projection system, the gyro sensor 41 must be mounted such that the Xs, Ys, and Zs axes are parallel to the X, Y, and Z axes, respectively, of the vehicle 200.

Fig. 3(a) shows a state in which the gyro sensor 41 is correctly mounted on the vehicle 200, i.e., mounted such that the Xs, Ys, and Zs axes are parallel to the X, Y, and Z axes, respectively, of the vehicle 200. Fig. 3(b) shows a state in which the gyro sensor 41 is mounted on the vehicle 200 while being deviated from the posture of Fig. 3(a) by an angle $\theta$ around the Xs axis.

In Fig. 3(a), the gyro sensor 41 detects the angular speed of the vehicle 200 in the rotation direction (roll direction) around the X axis, only around the Xs axis. The gyro sensor 41 detects the angular speed in the rotation direction (pitch direction) around the Y axis, only around the Ys axis. The gyro sensor 41 detects the angular speed in the rotation direction (yaw direction) around the Z axis, only around the Zs axis.

On the other hand, in Fig. 3(b), the gyro sensor 41 detects the angular speed in the rotation direction around the X axis, only around the Xs axis. However, since the gyro sensor 41 is tilted around the Xs axis, the angular speed in the rotation direction around the Y axis is decomposed and detected around the Ys axis and the Zs axis. Similarly, the angular speed in the rotation direction around the Z axis is decomposed and detected around the Ys axis and the Zs axis.

Therefore, the gyro sensor 41 shown in Fig. 3(b) cannot accurately detect the movement of the vehicle 200 in the rotation direction around the Y axis and the rotation direction around the Z axis. Therefore, the correction processing apparatus 50 cannot accurately calculate the deviation amount of the vehicle 200, and the virtual image Iv of Fig. 1 may be deviated relative to a predetermined display object in the real view when displayed. Particularly, when the vehicle 200 is running, the angular speed of the vehicle 200 in the rotation direction (yaw direction) around the Z axis (yaw axis) generally has a value considerably larger than that of the angular speed of the vehicle 200 in the rotation direction (pitch axis) around the Y axis (pitch axis). Therefore, as shown in Fig. 3(b), when the gyro sensor 41 is mounted on the vehicle 200 with the deviation of the angle $\theta$, the gyro sensor 41 falsely detects a portion of the angular speed around the Z axis as the angular speed around the Y axis in detection of the angular speed around the Ys axis. Therefore, when the gyro sensor 41 detecting the angular speed of the vehicle 200 in the rotation direction around the Y axis is mounted on the vehicle 200, high accuracy is required for the mounting angle.

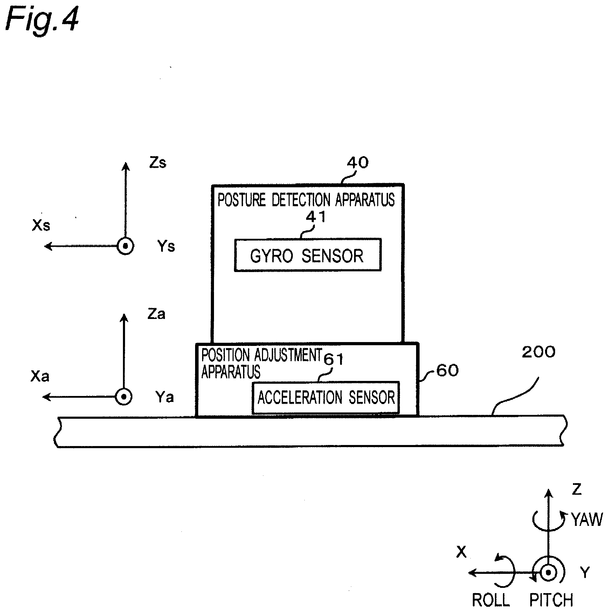

Therefore, in this embodiment, the position adjustment apparatus 60 is disposed so that the gyro sensor 41 is mounted on the vehicle 200 in the correct posture. Specifically, as shown in Fig. 4, the posture detection apparatus 40 is fixed to a frame of the vehicle 200 via the position adjustment apparatus 60. The position adjustment apparatus 60 is configured to operate in a predetermined direction and is configured such that an angle of mounting of the posture detection apparatus 40 onto the vehicle 200 can be adjusted.

1-3. Configuration of Position Adjustment Apparatus

The position adjustment apparatus 60 is an apparatus for adjusting the angle of mounting of the posture detection apparatus 40 onto the vehicle 200 by rotating in the roll angle, pitch angle, and yaw angle directions to operate in the X-axis, Y-axis, and Z-axis directions. The X axis is an example of a first axis, the Y axis is an example of a second axis, and the Z axis is an example of a third axis. As shown in Fig. 2, the position adjustment apparatus 60 includes an acceleration sensor 61 and a signal output part 72 for outputting a detection signal from the acceleration sensor 61 to the outside.

The acceleration sensor 61 is a triaxial sensor having Xa, Ya, and Za axes orthogonal to each other. The posture detection apparatus 40 is fixed to the position adjustment apparatus 60 such that a plane including the Xs axis and the Ys axis of the gyro sensor 41 (hereinafter referred to as "Xs-Ys plane") becomes parallel to a plane including the Xa axis and the Ya axis of the acceleration sensor 61 (hereinafter referred to as "Xa-Ya plane").

In adjustment of the mounting angle, the yaw angle of the gyro sensor 41 is adjusted based on the outer shape of the posture detection apparatus 40 such that the Xs and Ys axes of the gyro sensor 41 are parallel to the X and Y axes, respectively, of the vehicle 200. The roll angle and the pitch angle of the gyro sensor 41 are adjusted based on a gravitational acceleration detected by the acceleration sensor 61 such that the Xa-Ya plane of the acceleration sensor 61 becomes parallel to a plane including the X axis and the Y axis of the vehicle 200 (hereinafter referred to as "X-Y plane").

The signal output part 72 is an output terminal for transmitting the detection signal by wire or a signal transmission part for wirelessly transmitting the detection signal.

A specific configuration of the position adjustment apparatus 60 will hereinafter be described.

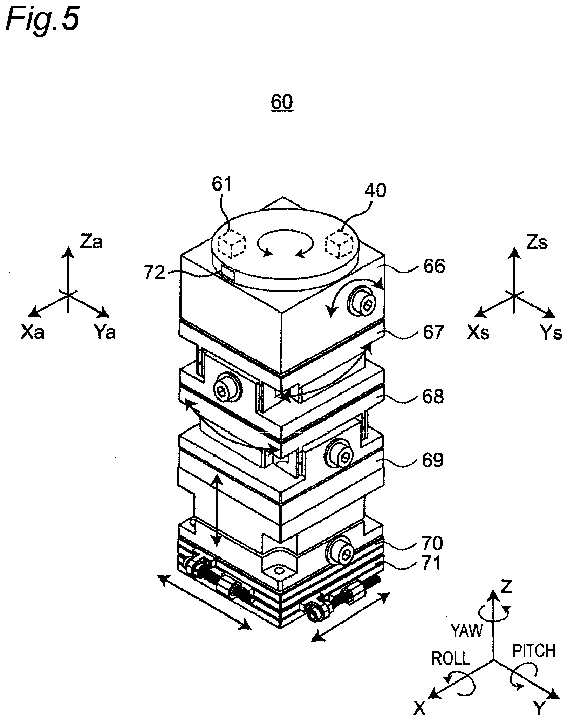

Fig. 5 is a perspective view showing the configuration of the position adjustment apparatus 60. The position adjustment apparatus 60 includes a third rotation mechanism 66, a second rotation mechanism 67, a first rotation mechanism 68, a first slide mechanism 69, a second slide mechanism 70, a third slide mechanism 71, an acceleration sensor 61, and a signal output part 72. The third rotation mechanism 66, the second rotation mechanism 67, the first rotation mechanism 68, the first slide mechanism 69, the second slide mechanism 70, and the third slide mechanism 71 are examples of moving mechanisms. The second slide mechanism 70, the first slide mechanism 69, the first rotation mechanism 68, the second rotation mechanism 67, and the third rotation mechanism 66 are stacked in this order on the third slide mechanism 71. The acceleration sensor 61 and the signal output part 72 are arranged in the third rotation mechanism 66. The third slide mechanism 71 is fixed to the vehicle 200. The posture detection apparatus 40 is fixed onto the third rotation mechanism 66. As shown in Fig. 4, the detection apparatus 40 is arranged in the third rotation mechanism 66 such that the Xs, Ys, and Zs axes serving as detection axes of the gyro sensor 41 are parallel to the Xa, Ya, and Za axes, respectively, serving as detection axes of the acceleration sensor 61.

The third rotation mechanism 66, the second rotation mechanism 67, and the first rotation mechanism 68 are mechanisms adjusting the posture of the posture detection apparatus 40 in the yaw angle, pitch angle, and roll angle directions, respectively. The first slide mechanism 69, the second slide mechanism 70, and the third slide mechanism 71 are mechanisms adjusting the position of the posture detection apparatus 40 in the Z-axis, Y-axis, and X-axis directions, respectively.

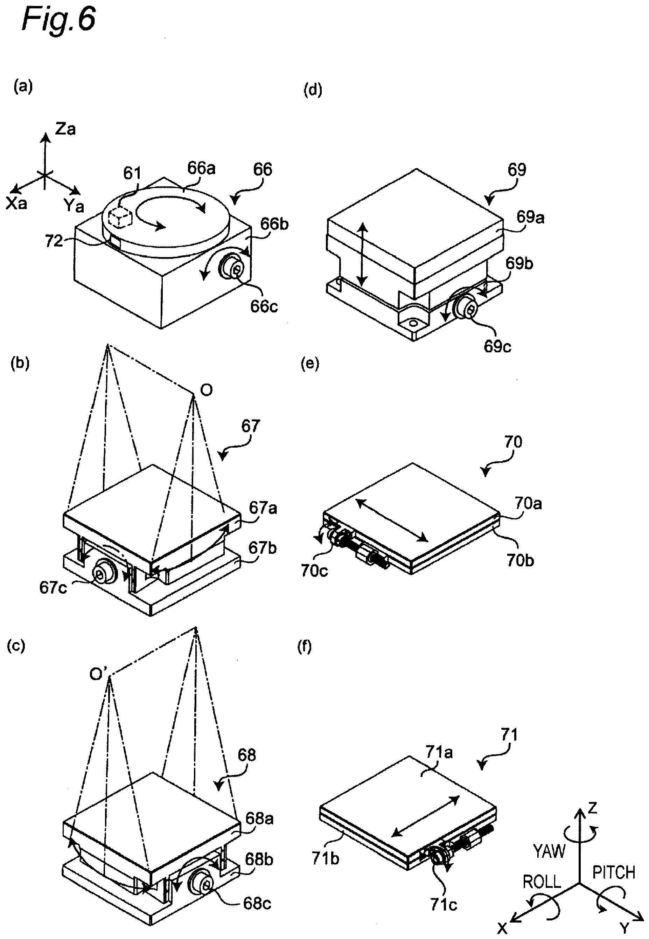

Fig. 6 is a diagram showing each constituent element of the position adjustment apparatus 60.

Fig. 6(a) shows the third rotation mechanism 66. The third rotation mechanism 66 includes an acceleration sensor 61, a signal output part 72, a rotating stage 66a, a base 66b, an operation part 66c, and a signal output part 72. The rotating stage 66a is an example of a second mounting base.

The rotating stage 66a is arranged rotatably around an axis parallel to a normal line of a principal surface thereof on the base 66b. The acceleration sensor 61 is arranged on the base 66b such that the Xa-Ya plane thereof is parallel to a principal surface of the rotating stage 66a and that the Za axis thereof is parallel to the normal line of the principal surface of the rotating stage 66a. The rotating stage 66a rotates when the operation part 66c is operated.

Fig. 6(b) shows the second rotation mechanism 67. The second rotation mechanism 67 includes a base 67b, a rotating stage 67a, and an operation part 67c. The rotating stage 67a rotates in an arrow direction relative to the base 67b. The rotating stage 67a rotates when the operation part 67c is operated.

Fig. 6(c) shows the first rotation mechanism 68. The first rotation mechanism 68 includes a base 68b, a rotating stage 68a, and an operation part 68c. The rotating stage 68a rotates in an arrow direction relative to the base 68b. The rotating stage 68a rotates when the operation part 68c is operated.

Fig. 6(d) shows the first slide mechanism 69. The first slide mechanism 69 includes a base 69b, an elevating stage 69a, and an operation part 69c. When the position adjustment apparatus 60 is mounted on the vehicle 200, the elevating stage 69a moves in the Z-axis direction of the vehicle 200 relative to the base 69b. The elevating stage 69a moves when the operation part 69c is operated.

Fig. 6(e) shows the second slide mechanism 70. The second slide mechanism 70 includes a base 70b, a slide stage 70a, and an operation part 70c. When the position adjustment apparatus 60 is mounted on the vehicle 200, the slide stage 70a slides relative to the base 70b in an arrow direction, i.e., in the Y-axis direction of the vehicle 200. The slide stage 70a slides when the operation part 70c is operated.

Fig. 6(f) shows the third slide mechanism 71. The third slide mechanism 71 includes a base 71b, a slide stage 71a, and an operation part 71c. The base 71b is an example of a first mounting base. When the position adjustment apparatus 60 is mounted on the vehicle 200, the slide stage 71a slides in an arrow direction relative to the base 71b, i.e., in the X-axis direction of the vehicle 200. The slide stage 71a slides when the operation part 71c is operated.

The third rotation mechanism 66, the second rotation mechanism 67, the first rotation mechanism 68, the first slide mechanism 69, the second slide mechanism 70, and the third slide mechanism 71 can be formed by using known techniques. For example, the techniques described in Patent Documents 2 to 5 may be used for forming the mechanisms.

1-3. Operation

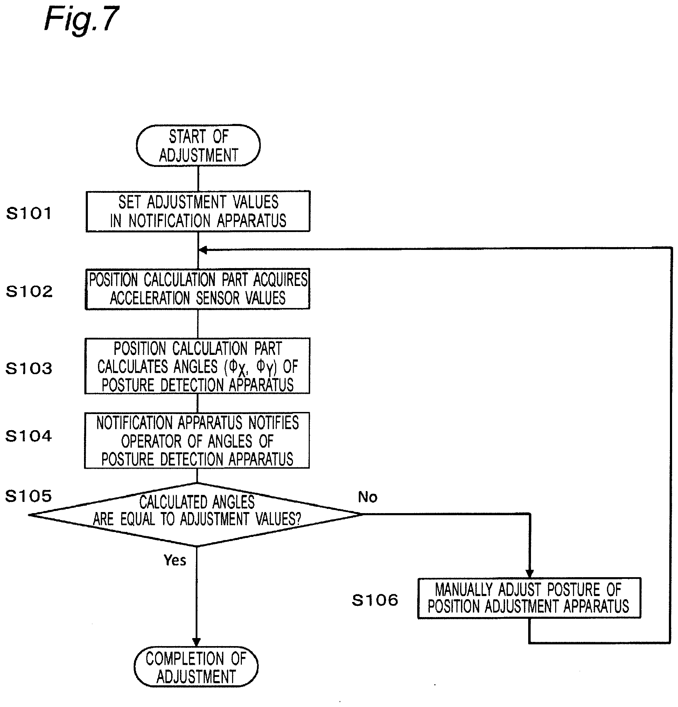

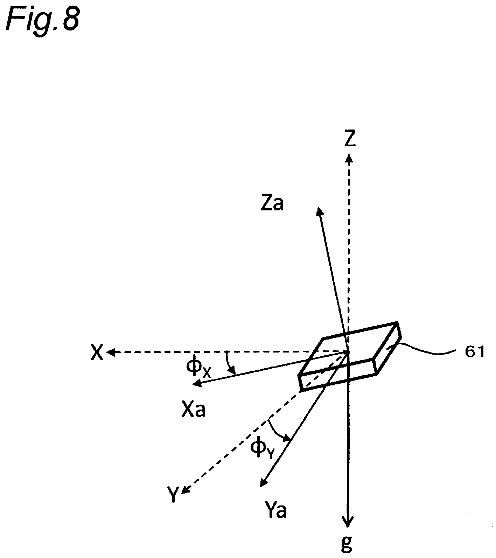

Position adjustment of the posture detection apparatus 40 of the projection system 100 having the above configuration will be described with reference to Figs. 7 and 8.

The posture detection apparatus 40 is mounted on the vehicle 200 via the position adjustment apparatus 60 as shown in Fig. 4. The acceleration sensor 61 of the position adjustment apparatus 60 transmits a detection signal indicative of the posture of the acceleration sensor 61 via the signal output part 72 to the correction processing apparatus 50. The position calculation part 53 of the correction processing apparatus 50 calculates the mounting angle of the posture detection apparatus 40 based on the detection signal received from the acceleration sensor 61. The notification apparatus 80 displays the mounting angle calculated by the position calculation part 53. The operator visually recognizes the mounting angle displayed by the notification apparatus 80 and manually operates the position adjustment apparatus 60 to adjust the posture of the posture detection apparatus 40. The operator adjusts the posture of the posture detection apparatus 40 by operating the position adjustment apparatus 60 until the mounting angle becomes suitable.

Fig. 7 is a flowchart showing a flow of the position adjustment.

First, an operator sets adjustment values in the notification apparatus 80 (S101). For example, the adjustment values are angles in the pitch direction and the roll direction after the position adjustment desired by the operator. The adjustment values are set from an external device such as a personal computer; however, the present invention is not limited thereto. For example, the posture detection apparatus 40 may include an input part, and the adjustment values may be set via the input part.

Subsequently, the position calculation part 53 acquires acceleration sensor values (Xa, Ya, Za) from the acceleration sensor 61 via the communication part 51 (S102).

The position calculation part 53 calculates an angle $\Phi_X$ in the pitch direction and an angle $\Phi_Y$ in the roll direction of the posture detection apparatus 40 from the acceleration sensor values (Xa, Ya, Za) (S103). Fig. 8 is a diagram for explaining a method of calculating an angle from the acceleration sensor values. When the Xa, Ya, and Za axes of the acceleration sensor 61 are tilted from the X, Y, and Z axes of the vehicle 200 as shown in Fig. 8, i.e., the acceleration sensor 61 is tilted downward by an angle $\Phi_X$ in the pitch direction of the vehicle 200 and is tilted downward by an angle $\Phi_Y$ in the roll direction of the vehicle, the angles ($\Phi_X$, $\Phi_Y$) are calculated by using Eqs. (1) and (2) below.

$$\phi_X = \sin^{-1}\left(\frac{Xa}{\sqrt{Xa^2+Ya^2+Za^2}}\right) \times 180/PI \qquad \dots \text{Eq. (1)}$$

$$\phi_Y = \sin^{-1}\left(\frac{Ya}{\sqrt{Xa^2+Ya^2+Za^2}}\right) \times 180/PI \qquad \dots \text{Eq. (2)}$$

Returning to Fig. 7, the notification apparatus 80 displays the angles ($\Phi_X$, $\Phi_Y$) of the posture detection apparatus 40 calculated by the position calculation part 53 on the notification apparatus 80 for notification to the operator (S104). In this case, the notification apparatus 80 displays the adjustment values together with the angles ($\Phi_X$, $\Phi_Y$).

The operator visually recognizes the angles ($\Phi_X$, $\Phi_Y$) and the adjustment values displayed on the notification apparatus 80 to determine whether the angles ($\Phi_X$, $\Phi_Y$) are equal to the adjustment values. If it is determined that the angles ($\Phi_X$, $\Phi_Y$) are equal to the adjustment values (Yes at S105), the operator fixes the position adjustment apparatus 60 and completes the adjustment.

On the other hand, when it is determined that the angles ($\Phi_X$, $\Phi_Y$) are not equal to the adjustment values (No at S105), the operator manually adjusts the posture of the position adjustment apparatus (S106). Subsequently, the position calculation part 53 performs steps S102 to S105 again. In this way, the operator can adjust the position of the posture detection apparatus 40.

1-4. Summary

As described above, the position adjustment apparatus 60 includes the base 71b, the rotating stage 66a, the moving mechanisms 66 to 71, the acceleration sensor 61, and the signal output part 72. The base 71b is mounted on a portion of the vehicle 200. The rotating stage 66a is mounted on the posture detection apparatus 40. The moving mechanisms 66 to 71 rotationally move the rotating stage 66a relative to the base 71b in at least two orthogonal axial directions. The acceleration sensor 61 is arranged on the rotating stage 66a. The signal output part 72 transmits the detection signal of the acceleration sensor 61.

The moving mechanisms of the position adjustment apparatus 60 include the first rotating mechanism 68 and the second rotating mechanism 67. The first rotation mechanism 68 rotationally moves the rotating stage 66a in the roll direction. The second rotation mechanism 67 rotationally moves the rotating stage 66a in the pitch direction. The roll direction is a direction of rotation around an axis parallel to an axis extending in a front-rear direction of the vehicle 200 while the position adjustment apparatus 60 is mounted on the vehicle 200. The pitch direction is a direction of rotation around an axis parallel to an axis extending in a width direction of the vehicle 200 while the position adjustment apparatus 60 is mounted on the vehicle 200. The front-rear direction of the vehicle 200 is the straight running direction of the vehicle 200.

As a result, the operator can manually adjust the posture of the rotating stage 66a relative to the base 71b in the roll direction and the pitch direction.

The moving mechanisms of the position adjustment apparatus 60 further include the third rotating mechanism 66. The third rotation mechanism 66 rotationally moves the rotating stage 66a in the yaw direction. The yaw direction is a direction of rotation around an axis parallel to an axis orthogonal to the axis extending in the front-rear direction and the axis extending in the width direction of the vehicle 200 while the position adjustment apparatus 60 is mounted on the vehicle 200.

As a result, the operator can manually adjust the posture of the rotating stage 66a relative to the base 71b also in the yaw direction.

The moving mechanisms of the position adjustment apparatus 60 further include the first slide mechanism 69, the second slide mechanism 70, and the third slide mechanism 71. The first slide mechanism 69 slides and moves the rotating stage 66a in the Z-axis direction while the position adjustment apparatus 60 is mounted on the vehicle 200. The second slide mechanism 70 slides and moves the rotating stage 66a in the Y-axis direction while the position adjustment apparatus 60 is mounted on the vehicle 200. The third slide mechanism 71 slides and moves the rotating stage 66a in the X-axis direction while the position adjustment apparatus 60 is mounted on the vehicle 200.

As a result, the operator can manually move the rotating stage 66a in the X-axis, Y-axis, and Z-axis directions while maintaining the postures of the rotating stage 66a in the roll, pitch, and yaw directions relative to the base 71b.

The projection system 100 includes the posture detection apparatus 40, the projection apparatus 10, and the position adjustment apparatus 60. The posture detection apparatus 40 detects the posture of the vehicle 200. The projection apparatus 10 projects vehicle information while correcting a projection position by reference to the detection result from the posture detection apparatus 40. The position adjustment apparatus 60 is used for adjusting the mounting posture of the posture detection apparatus 40 relative to the vehicle 200.

As a result, the operator can manually adjust the posture of the posture detection apparatus 40 relative to the vehicle 200 by operating the position adjustment apparatus 60. Therefore, the present disclosure can provide the projection system improved in the posture detection accuracy for the vehicle 200.

(Second Embodiment)

In the first embodiment, the position adjustment apparatus allowing the operator to manually adjust the position has been described. On the other hand, in this embodiment, a position adjustment apparatus automatically adjusting the position will be described.

2-1. Configuration of Projection System

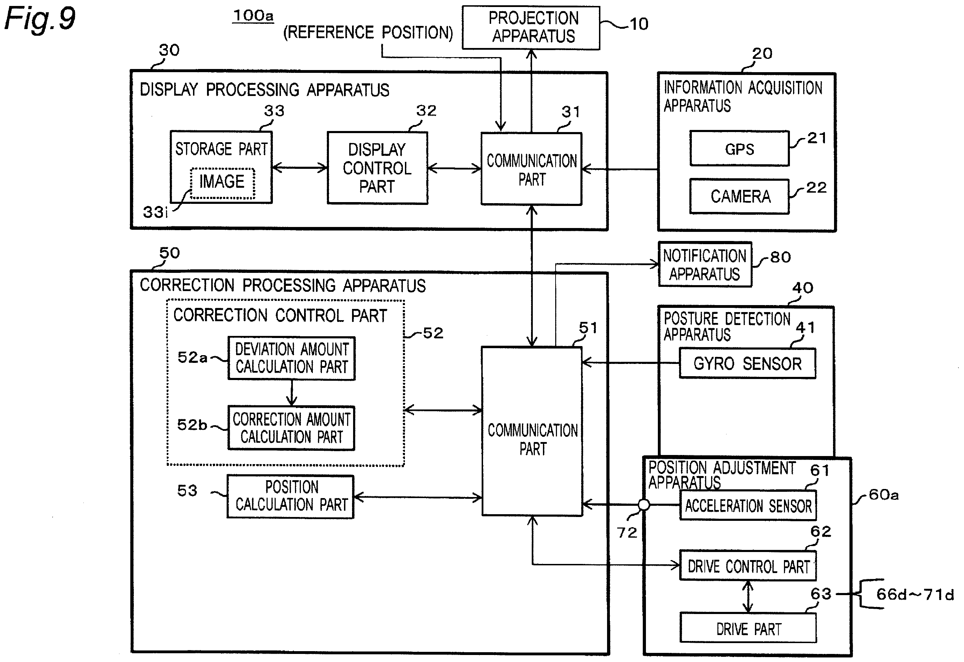

Fig. 9 is a block diagram showing an internal configuration of the projection system 100a of this embodiment. The projection system 100a includes a position adjustment apparatus 60a instead of the position adjustment apparatus 60 of the first embodiment.

The position adjustment apparatus 60a further includes a drive control part 62 and a plurality of drive parts 66d to 71d in addition to the acceleration sensor 61 in the configuration of the first embodiment. The drive parts 66d to 71d are collectively denoted by reference numeral 63.

The drive part 63 is made up of a motor and an actuator.

The drive control part 62 is made up of a communication circuit communicating with an external device, a drive circuit driving and controlling the drive part 63 in accordance with a control command from the external device, etc.

The acceleration sensor 61 outputs a detection signal indicative of the posture of the posture detection apparatus 40, i.e., the position adjustment apparatus 60a, to the correction processing apparatus 50 as mounting angle information of the posture detection apparatus 40. The correction processing apparatus 50 drives the drive part 63 via the drive control part 62. The position adjustment apparatus 60a causes the drive part 63 to change the posture of the posture detection apparatus 40 relative to the vehicle 200.

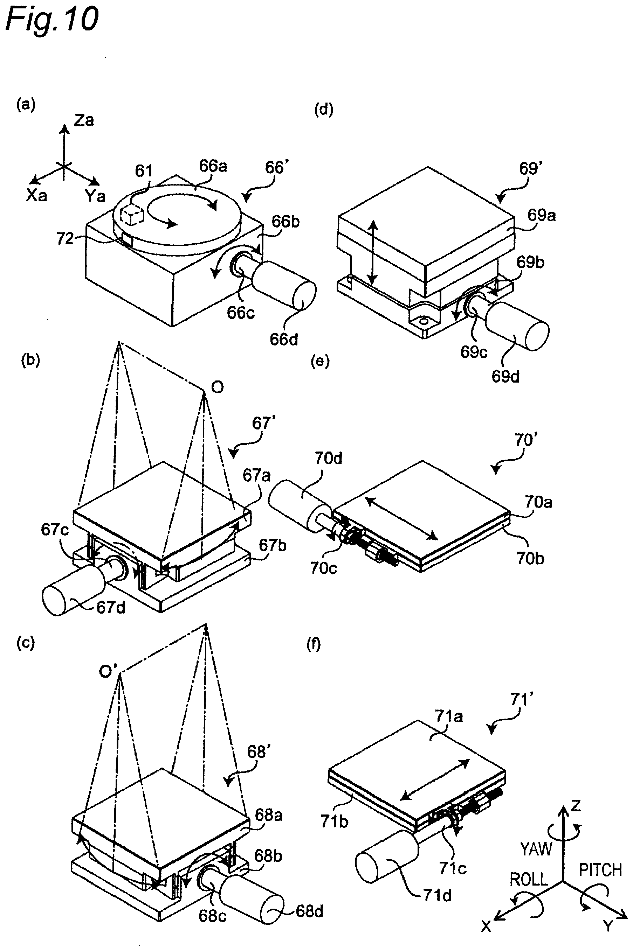

Fig. 10 is a diagram showing each constituent element of the position adjustment apparatus 60a in this embodiment.

Fig. 10(a) shows a third rotation mechanism 66'. The third rotation mechanism 66' further includes the drive part 66d in addition to the configuration of the first embodiment. The drive part 66d is coupled to the operation part 66c and can operate the rotating stage 66a.

Fig.10(b) shows a second rotation mechanism 67'. The second rotation mechanism 67' further includes the drive part 67d in addition to the configuration of the first embodiment. The drive part 67d is coupled to the operation part 67c and can operate the rotating stage 67a.

Fig. 10(c) shows a first rotation mechanism 68'. The first rotation mechanism 68' further includes the drive part 68d in addition to the configuration of the first embodiment. The drive part 68d is coupled to the operation part 68c and can operate the rotating stage 68a.

Fig. 10(d) shows a first slide mechanism 69'. The first slide mechanism 69' further includes the drive part 69d in addition to the configuration of the first embodiment. The drive part 69d is coupled to the operation part 69c and can operate the elevating stage 69a.

Fig. 10(e) shows a second slide mechanism 70'. The second slide mechanism 70' further includes the drive part 70d in addition to the configuration of the first embodiment. The drive part 70d is coupled to the operation part 70c and can operate the slide stage 70a.

Fig. 10(f) shows a third slide mechanism 71'. The third slide mechanism 71' further includes the drive part 69d in addition to the configuration of the first embodiment. The drive part 71d is coupled to the operation part 71c and can operate the slide stage 71a.

2-2. Operation

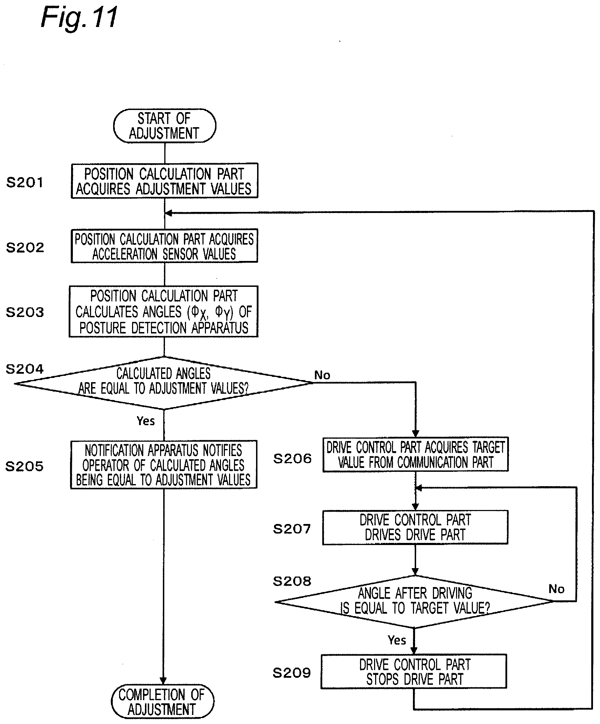

A position adjustment process of the posture detection apparatus 40 of the projection system 100a having the above configuration will be described with reference to Fig. 11. Fig. 11 is a flowchart showing a flow of the position adjustment described above.

The acceleration sensor 61 of the position adjustment apparatus 60a transmits a detection signal indicative of the posture of the acceleration sensor 61, i.e., the posture detection apparatus 40, via the signal output part 72 to the correction processing apparatus 50. The position calculation part 53 of the correction processing apparatus 50 calculates the mounting angle of the posture detection apparatus 40 based on the detection signal received from the acceleration sensor 61. The correction processing apparatus 50 adjusts the posture of the posture detection apparatus 40 by operating the position adjustment apparatus 60 until the mounting angle becomes suitable.

First, the position calculation part 53 acquires adjustment values (S201). For example, the adjustment values are angles in the pitch direction and the roll direction after the position adjustment desired by the operator. The adjustment values are set from an external device such as a personal computer; however, the present invention is not limited thereto. For example, the posture detection apparatus 40 may include an input part, and the adjustment values may be set via the input part.

Subsequently, the position calculation part 53 acquires acceleration sensor values (Xa, Ya, Za) from the acceleration sensor 61 via the communication part 51 (S202).

The position calculation part 53 calculates the angle $\Phi_X$ in the pitch direction and the angle $\Phi_Y$ in the roll direction of the posture detection apparatus 40 from the acceleration sensor values (Xa, Ya, Za) (S203). The calculation method is the same as step S103 of Fig. 7 according to the first embodiment.

The position calculation part 53 determines whether the angles ($\Phi_X$, $\Phi_Y$) of the posture detection apparatus 40 are equal to the adjustment values (S204).

If the position calculation part 53 determines that the angles ($\Phi_X$, $\Phi_Y$) of the posture detection apparatus 40 are equal to the adjustment values (Yes at S204), the display of the notification apparatus 80 displays that the angles ($\Phi_X$, $\Phi_Y$) are equal to the adjustment values for notification to the operator (S205), and the adjustment is completed.

On the other hand, if the position calculation part 53 determines that the angles ($\Phi_X$, $\Phi_Y$) of the posture detection apparatus 40 ate not equal to the adjustment values (No at S204), the drive control part 62 acquires a target value via the communication part 51 (S206).

The drive control part 62 drives the drive part 63 in accordance with the received target value to adjust the mounting angle of the posture detection apparatus 40 (S207).

If it is determined that the angle after the driving is equal to the target value (Yes at S208), the drive control part 62 stops driving the drive part 63 and performs steps S202 to S204 again.

If it is determined that the angle after the driving is not equal to the target value (No at S208), the drive control part 62 goes to step S207.

2-3. Summary

As described above, the position adjustment apparatus 60a further includes the drive parts 67d and 68d as compared to the position adjustment apparatus 60 of the first embodiment. The drive part 67d drives the second rotation mechanism 67'. The drive part 68d drives the first rotation mechanism 68'.

As a result, the position adjustment apparatus 60a can automatically adjust the posture of the rotating stage 66a relative to the base 71b in the roll direction and the pitch direction.

The position adjustment apparatus 60a further includes the drive parts 69d, 70d, 71d as compared to the position adjustment apparatus 60 of the first embodiment. The drive part 69d drives the first slide mechanism 69'. The drive part 70d drives the second slide mechanism 70'. The drive part 71d drives the third slide mechanism 71'.

As a result, the position adjustment apparatus 60a can automatically adjust the posture of the rotating stage 66a relative to the base 71b in the X-axis, Y-axis, and Z-axis directions.

The projection system 100 includes the posture detection apparatus 40, the projection apparatus 10, and the position adjustment apparatus 60a. The posture detection apparatus 40 detects the posture of the vehicle 200. The projection apparatus 10 projects vehicle information while correcting a projection position with reference to the detection result from the posture detection apparatus 40. The position adjustment apparatus 60a is used for adjusting the mounting posture of the posture detection apparatus 40 relative to the vehicle 200.

As a result, the position adjustment apparatus 60 automatically adjusts the posture of the posture detection apparatus 40 relative to the vehicle 200, so that the operator can easily adjust the posture of the posture detection apparatus 40 relative to the vehicle 200. Therefore, the present disclosure can provide the projection system further improved in the posture detection accuracy for the vehicle 200.

(Other Embodiments)

As described above, the embodiments have been described as exemplification of the techniques disclosed in this application. However, the techniques in the present disclosure are not limited thereto and are also applicable to embodiments in which modifications, replacements, additions, omissions, etc. are appropriately made. Additionally, the constituent elements described in the first embodiment can be combined to provide a new embodiment.

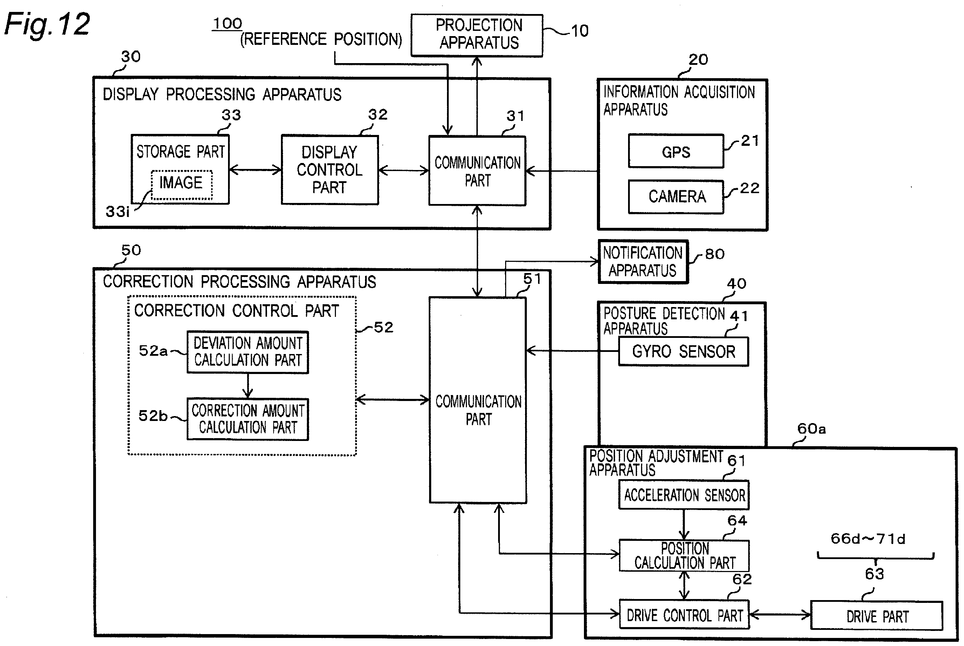

The projection system 100a of the second embodiment includes the position calculation part 53 in the correction processing apparatus 50; however, the present invention is not limited thereto. For example, as shown in Fig. 12, a position calculation part 64 may be included in the position adjustment apparatus 60a.

Although the position adjustment apparatus 60 of the first embodiment moves the posture detection apparatus 40 in the directions of six axes relative to the base 71b, the position adjustment apparatus may be configured to move the posture detection apparatus in directions of at least one of the six axes. For example, the position adjustment apparatus 60 may be configured to move the posture detection apparatus 40 only in the roll angle direction and the pitch angle direction. In this case, the position adjustment apparatus 60 includes only the second rotating mechanism 67 and the first rotating mechanism 68.

Although the position adjustment apparatus 60a of the second embodiment moves the posture detection apparatus 40 in the directions of six axes relative to the base 71b, the position adjustment apparatus may be configured to move the posture detection apparatus in directions of at least one of the six axes. For example, the position adjustment apparatus 60a may be configured to move the posture detection apparatus 40 only in the roll angle direction and the pitch angle direction. In this case, the position adjustment apparatus 60 includes only the second rotating mechanism 67' and the first rotating mechanism 68'.

Although the acceleration sensor 61 of the first and second embodiments is disposed in the position adjustment apparatus 60, 60a, the acceleration sensor 61 may be disposed in another apparatus. For example, the acceleration sensor 61 may be disposed in the posture detection apparatus 40.

Although the position adjustment apparatus 60a of the second embodiment includes the drive part for each of the moving mechanisms 66' to 71', the drive part may be included in at least one of the moving mechanisms 66' to 71'. For example, the drive part may be included only in the second rotating mechanism 67' and the first rotating mechanism 68'.

Although the position adjustment apparatus 60, 60a of the first and second embodiments are used for mounting the posture detection apparatus 40 on the vehicle 200, the position adjustment apparatus may be used for mounting another apparatus. The position adjustment apparatus 60, 60a may be used for mounting a predetermined sensor apparatus on the vehicle 200.

Although the posture detection apparatus 40 of the first and second embodiments includes the one gyro sensor 41 detecting angular speed in three directions, the posture detection apparatus 40 is not limited to such a configuration. For example, the posture detection apparatus 40 may include two or three gyro sensors detecting angular speed in one direction. In this case, the two or three gyro sensors are arranged such that axes are orthogonal to each other. Alternatively, the posture detection apparatus 40 may include only one gyro sensor detecting angular speed in one direction.

Although the position adjustment apparatus 60, 60a of the first and second embodiments includes the one acceleration sensor 61 detecting acceleration in three directions, the position adjustment apparatus 60, 60a is not limited to such a configuration. For example, the position adjustment apparatus 60, 60a may include two or three acceleration sensors detecting acceleration in one direction. In this case, the two or three acceleration sensors are arranged such that axes are orthogonal to each other. Alternatively, the position adjustment apparatus 60, 60a may include only one acceleration sensor detecting acceleration in one direction.

(1) When the position adjustment apparatus 60, 60a includes the three acceleration sensors detecting acceleration in one direction

The respective angles $\Phi_X$, $\Phi_Y$ of the posture detection apparatus 40 in the pitch direction and the roll direction are calculated by using Eqs. (1) and (2). The position calculation part 53 may calculate only one of the angle $\Phi_X$ in the pitch direction and the angle $\Phi_Y$ in the roll direction.

(2) When the position adjustment apparatus 60, 60a includes two acceleration sensors detecting acceleration in one direction

The respective angles $\Phi_X$, $\Phi_Y$ of the posture detection apparatus 40 in the pitch direction and the roll direction are calculated by using Eqs. (3) and (4). In this case, a first acceleration sensor is arranged parallel to the pitch axis of the posture detection apparatus 40, and a second acceleration sensor is arranged parallel to the roll axis of the posture detection apparatus 40. Ax is an output value of the first acceleration sensor. $Ax_{Full}$ is an output value of the first acceleration sensor when the direction of gravitational acceleration matches the direction of the axis of the first acceleration sensor. Ay is an output value of the second acceleration sensor. $Ay_{Full}$ is an output value of the second acceleration sensor when the direction of gravitational acceleration match the direction of the axis of the second acceleration sensor. The position calculation part 53 may calculate only one of the angle $\Phi_X$ in the pitch direction and the angle $\Phi_Y$ in the roll direction.

$$\phi_X = \sin^{-1}\left(\frac{Ax}{Ax_{Full}}\right) \times 180/PI \qquad \dots \text{Eq. (3)}$$

$$\phi_y = \sin^{-1}\left(\frac{Ay}{Ay_{Full}}\right) \times 180/PI \qquad \dots \text{Eq. (4)}$$

(3) When the position adjustment apparatus 60, 60a includes only one acceleration sensor detecting acceleration in one direction

The angle $\Phi$ of the posture detection apparatus 40 is calculated by using Eq. (5). In this case, if the acceleration sensor is arranged such that the axis thereof is parallel to the pitch axis of the posture detection apparatus 40, only the angle $\Phi$ in the roll direction is calculated, and if the acceleration sensor is arranged such that the axis thereof is parallel to the roll axis of the posture detection apparatus 40, only the angle $\Phi$ in the pitch direction is calculated.

$$\phi = \sin^{-1}\left(\frac{A}{A_{Full}}\right) \times 180/PI \qquad \dots \text{Eq. (5)}$$

Although the position calculation part 53 in the first and second embodiments calculates both the angle $\Phi_X$ in the pitch direction and the angle $\Phi_Y$ in the roll direction, only one of the the angle $\Phi_X$ in the pitch direction and the angle $\Phi_Y$ in the roll direction may be calculated.

The projection system 100, 100a of the first and second embodiments is disposed in the vehicle 200. However, the present disclosure is not limited thereto. The projection system 100, 100a may be disposed in a moving body such as a vehicle, a ship, or an aircraft. Therefore, the position adjustment apparatus 60, 60a may adjust the mounting position of the posture detection apparatus 40 mounted on a moving body for detecting a variation in posture of the moving body.

The embodiments have been described as exemplification of the techniques in the present disclosure. The accompanying drawings and the detailed description have been provided for this purpose.

Therefore, the constituent elements described in the accompanying drawings and the detailed description may include not only the constituent elements essential for solving the problem but also constituent elements not essential for solving the problem so as to illustrate the techniques. Thus, even though these non-essential constituent elements are included in the accompanying drawings and the detailed description, these non-essential constituent elements should not immediately be recognized as being essential.

Since the embodiments described above are intended to illustrate the techniques in the present disclosure, various modifications, replacements, additions, omissions, etc. can be made within the claims and the scope equivalent thereto.

EXPLANATIONS OF LETTERS OR NUMERALS

10 projection apparatus
20 information acquisition apparatus
30 display processing apparatus

40 posture detection apparatus
50 correction processing apparatus
60, 60a position adjustment apparatus
61 acceleration sensor
72 signal output part
100,100a projection system
200 moving body (vehicle)
(Iv virtual image
Lc display light)

## Claims

1. A position adjustment apparatus adjusting a mounting position of a posture detection apparatus mounted on a moving body for detecting a variation in posture of the moving body, the position adjustment apparatus comprising:

   a first mounting base mounted on a part of the moving body;
   a second mounting base mounted on the posture detection apparatus;
   a moving mechanism rotationally moving the second mounting base relative to the first mounting base in at least one of three axial directions corresponding to a first axis, a second axis, and a third axis orthogonal to each other;
   an acceleration sensor arranged on the second mounting base; and
   a signal output part outputting a detection signal from the acceleration sensor to the outside.

2. The position adjustment apparatus according to claim 1, wherein
   the moving mechanism includes a first rotating mechanism rotationally moving the second mounting base around the first axis, and a second rotating mechanism rotationally moving the second mounting base around the second axis, wherein
   the first axis is an axis extending in a front-rear direction of the moving body while the position adjustment apparatus is mounted on the moving body, and wherein the second axis is an axis extending in a width direction of the moving body while the position adjustment apparatus is mounted on the moving body.

3. The position adjustment apparatus according to claim 1, wherein
   the moving mechanism includes a first rotating mechanism rotationally moving the second mounting base around the first axis, and wherein
   the first axis is an axis extending in a front-rear direction of the moving body while the position adjustment apparatus is mounted on the moving body.

4. The position adjustment apparatus according to claim 1, wherein
   the moving mechanism includes a second rotating mechanism rotationally moving the second mounting base around the second axis, and wherein
   the second axis is an axis extending in a width direction of the moving body while the position adjustment apparatus is mounted on the moving body.

5. The position adjustment apparatus according to claim 2, further comprising drive parts respectively driving the first rotation mechanism and the second rotation mechanism.

6. The position adjustment apparatus according to claim 2, wherein the moving mechanism further includes a third rotation mechanism rotationally moving the second mounting base around the third axis.

7. The position adjustment apparatus according to claim 1, wherein the moving mechanism further includes a slide mechanism parallelly moving the second mounting base relative to the first mounting base in at least one of the three axial directions.

8. The position adjustment apparatus according to claim 7, further comprising a drive part driving the slide mechanism.

9. A projection system comprising:

a posture detection apparatus detecting a variation in posture of the moving body;

a projection apparatus projecting moving object information while correcting a projection position by reference to a detection result from the posture detection apparatus; and

the position adjustment apparatus according to any one of claims 1 to 8, adjusting a mounting posture of the posture detection apparatus relative to the moving body.

10. The Projection system according to claim 9, wherein the posture detection apparatus includes a gyro sensor detecting a variation in posture of the moving body.

11. A projection system comprising:

a posture detection apparatus detecting a variation in posture of the moving body;

a projection apparatus projecting moving object information while correcting a projection position by reference to a detection result from the posture detection apparatus;

the position adjustment apparatus according to claim 5, adjusting a mounting posture of the posture detection apparatus relative to the moving body; and

a correction processing apparatus receiving a detection signal from the acceleration sensor to calculate a mounting position of the posture detection apparatus on the moving body, wherein

the position adjustment apparatus includes a drive control part controlling the drive parts, wherein

the position adjustment apparatus compares a mounting position calculated by the correction processing apparatus with a predetermined adjustment value, and wherein

the drive control part controls the drive parts in accordance with a result of the comparison by the position adjustment apparatus.

Fig.1

# Fig.2

*Fig.3*

(a)

(b)

EP 3 805 708 A1

*Fig.4*

Fig.5

# Fig.6

(a)

(d)

(b)

(e)

(c)

(f)

## Fig.7

```
                    ┌─────────────────┐
                    │    START OF      │
                    │   ADJUSTMENT     │
                    └─────────────────┘
                             │
                             ▼
        ┌──────────────────────────────────┐
S101    │    SET ADJUSTMENT VALUES          │
        │    IN NOTIFICATION APPARATUS      │
        └──────────────────────────────────┘
                             │
                             ▼
        ┌──────────────────────────────────┐
S102    │ POSITION CALCULATION PART ACQUIRES│
        │    ACCELERATION SENSOR VALUES     │
        └──────────────────────────────────┘
                             │
                             ▼
        ┌──────────────────────────────────┐
        │    POSITION CALCULATION PART      │
S103    │  CALCULATES ANGLES (Φχ, Φγ) OF    │
        │  POSTURE DETECTION APPARATUS      │
        └──────────────────────────────────┘
                             │
                             ▼
        ┌──────────────────────────────────┐
        │  NOTIFICATION APPARATUS NOTIFIES  │
S104    │     OPERATOR OF ANGLES OF         │
        │  POSTURE DETECTION APPARATUS      │
        └──────────────────────────────────┘
                             │
                             ▼
S105          ◇ CALCULATED ANGLES ◇         No
        ◇ ARE EQUAL TO ADJUSTMENT VALUES? ◇ ───────┐
                             │                       │
                            Yes                      ▼
                             │        ┌────────────────────────────────┐
                             │  S106  │ MANUALLY ADJUST POSTURE OF      │
                             │        │ POSITION ADJUSTMENT APPARATUS   │
                             │        └────────────────────────────────┘
                             ▼
                    ┌─────────────────┐
                    │  COMPLETION OF   │
                    │   ADJUSTMENT     │
                    └─────────────────┘
```

*Fig.8*

Fig.9

100a
(REFERENCE POSITION)

PROJECTION APPARATUS ~10

30

DISPLAY PROCESSING APPARATUS

33
STORAGE PART
IMAGE
33i

32
DISPLAY CONTROL PART

31
COMMUNICATION PART

20
INFORMATION ACQUISITION APPARATUS
GPS ~21
CAMERA ~22

NOTIFICATION APPARATUS ~80

50
CORRECTION PROCESSING APPARATUS

CORRECTION CONTROL PART ~52
52a DEVIATION AMOUNT CALCULATION PART
52b CORRECTION AMOUNT CALCULATION PART

53 POSITION CALCULATION PART

51
COMMUNICATION PART

40
POSTURE DETECTION APPARATUS 41
GYRO SENSOR

POSITION ADJUSTMENT APPARATUS 61
ACCELERATION SENSOR
72
60a
62
DRIVE CONTROL PART
63 66d~71d
DRIVE PART

EP 3 805 708 A1

# Fig.10

(a)

(b)

(c)

(d)

(e)

(f)

# Fig.11

```
                    ┌──────────────────┐
                    │    START OF       │
                    │   ADJUSTMENT      │
                    └──────────────────┘
                            │
                            ▼
  S201      ┌─────────────────────────────────┐
            │ POSITION CALCULATION PART        │
            │ ACQUIRES ADJUSTMENT VALUES       │
            └─────────────────────────────────┘
                            │
                            ▼
  S202      ┌─────────────────────────────────┐
            │ POSITION CALCULATION PART ACQUIRES│
            │ ACCELERATION SENSOR VALUES       │
            └─────────────────────────────────┘
                            │
                            ▼
  S203      ┌─────────────────────────────────┐
            │ POSITION CALCULATION PART        │
            │ CALCULATES ANGLES (Φχ, Φγ) OF    │
            │ POSTURE DETECTION APPARATUS      │
            └─────────────────────────────────┘
                            │
                            ▼
  S204      ◇ CALCULATED ANGLES ARE EQUAL      No
             TO ADJUSTMENT VALUES? ────────────────►
                            │ Yes
                            ▼
  S205      ┌─────────────────────────────────┐   S206  ┌────────────────────────────────┐
            │ NOTIFICATION APPARATUS NOTIFIES  │        │ DRIVE CONTROL PART ACQUIRES TARGET│
            │ OPERATOR OF CALCULATED ANGLES    │        │ VALUE FROM COMMUNICATION PART  │
            │ BEING EQUAL TO ADJUSTMENT VALUES │        └────────────────────────────────┘
            └─────────────────────────────────┘                    │
                            │              S207  ┌────────────────────────────────┐
                            │                    │ DRIVE CONTROL PART DRIVES DRIVE PART│
                            │                    └────────────────────────────────┘
                            │              S208  ◇ ANGLE AFTER DRIVING IS EQUAL TO TARGET VALUE?  No
                            │                            │ Yes
                            │              S209  ┌────────────────────────────────┐
                            │                    │ DRIVE CONTROL PART STOPS DRIVE PART│
                            ▼                    └────────────────────────────────┘
                    ┌──────────────────┐
                    │  COMPLETION OF    │
                    │   ADJUSTMENT      │
                    └──────────────────┘
```

25

Fig.12

## INTERNATIONAL SEARCH REPORT

| | International application No. |
|---|---|
| | PCT/JP2019/015372 |

### A. CLASSIFICATION OF SUBJECT MATTER
Int.Cl. G01D11/30(2006.01)i, B60K35/00(2006.01)i, G02B27/01(2006.01)i

According to International Patent Classification (IPC) or to both national classification and IPC

### B. FIELDS SEARCHED

Minimum documentation searched (classification system followed by classification symbols)
Int.Cl. G01D11/30, B60K35/00-37/06, G02B27/01, G01C19/00-72, G01C21/00-36

Documentation searched other than minimum documentation to the extent that such documents are included in the fields searched
Published examined utility model applications of Japan     1922-1996
Published unexamined utility model applications of Japan     1971-2019
Registered utility model specifications of Japan     1996-2019
Published registered utility model applications of Japan     1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 6-11353 A (MITSUBISHI PRECISION CO., LTD.) 21 January 1994, paragraphs [0007]-[0029], fig. 1-3 (Family: none) | 1-6<br>7-11 |
| X<br>A | JP 11-190633 A (JAPAN AVIATION ELECTRONICS INDUSTRY, LTD.) 13 July 1999, paragraphs [0003]-[0021], fig. 1, 2 (Family: none) | 1, 3<br>2, 4-11 |
| A | JP 2016-185768 A (NIPPON SEIKI CO., LTD.) 27 October 2016, paragraphs [0011]-[0042], fig. 1-7 (Family: none) | 1-11 |

☒  Further documents are listed in the continuation of Box C.        ☐  See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| 31.05.2019 | 11.06.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
|---|
| PCT/JP2019/015372 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-43342 A (SANYO ELECTRIC CO., LTD.) 03 March 2011, paragraphs [0106]-[0125], fig. 4 (Family: none) | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6201690 B
- JP 5318250 A
- JP 2016078162 A
- JP 2016082138 A
- JP 2015000460 A